# EUROPEAN PATENT SPECIFICATION

(11) **EP 2 004 954 B1**
(45) Date of publication and mention of the grant of the patent: **03.08.2011**
(21) Application number: 06732959.9
(22) Date of filing: 22.03.2006
(51) Int. Cl.: E21B 43/013, B63B 35/03, E21B 41/08

(54) **PRE-ASSEMBLY OF A SUBSEA BASE AND PIPELINE**
VORMONTAGE EINER UNTERWASSERBASIS UND ROHRLEITUNG
PRÉ-ASSEMBLAGE D'UNE BASE SOUS-MARINE ET D'UN PIPELINE

(43) Date of publication of application: 24.12.2008
(73) Proprietor: Itrec B.V., 3115 HH Schiedam (NL)
(72) Inventor: ROODENBURG, Joop, NL-2612 HA Delft (NL); WIJNING, Diederick, Bernardus, NL-3112 DP Schiedam (NL)
(74) Representative: Brookhuis, Hendrik Jan Arnold
(86) International application number: PCT/NL2006/000152
(87) International publication number: WO 2007/108672

(56) References cited:
- WO-A-98/23846
- GB-A- 1 201 471
- GB-A- 2 171 736
- US-A- 3 934 647

## Description

The present invention relates to a method for subsea hydrocarbon recovery, in which a wellbore is drilled using a base installed on the seabed, said base comprising a drilling guide, in which method at least one pipeline is to be connected to a network for storage and/ or processing operations. Such a method conventionally comprises the steps of:
- lowering and positioning a base on the seabed,
- drilling a wellbore through the drilling guide of the base,
- lowering and positioning the pipeline on the seabed, to which pipeline an end termination is connected,
- measuring the exact distance between the end termination of the pipeline and the base,
- preparing a connecting element made to size
- placing the connecting element manufactured to size between the wellbore and the pipeline.

Such a method is well-known and commonly applied in the art. For example, WO 98/23846 discloses a method for subsea hydrocarbon recovery according to the preamble of claim 1. In particular, WO 98/23846 discloses a system for offshore production of oil or gas, comprising a drilling vessel with drilling equipment, a bottom installation at the seabed, a drill string extending between the vessel and the bottom installation and a product riser adapted to connect the bottom installation to the vessel. A disadvantage of the known method is that the positioning of the pipeline and the placing of the connecting element are precise and therefore time-consuming and expensive operations.

The aim of the present invention is to provide an improved method for subsea hydrocarbon recovery. Witch hydrocarbon recovery all. types of recovery including oil and gas recovery are intended. This is achieved by a method according to claim 1, characterized by the following steps:
- preparing a pre-assembly of a base and one or more pipelines,
- lowering and positioning the pre-assembly on the seabed,
- drilling the wellbore through the drilling guide of the base,
- placing a connecting element between the wellbore and the pipeline.

One of the advantages of a pre-assembled base and one or more pipelines is that the one or more pipelines are laid at an earlier stage in the operation for subsea hydrocarbon recovery, enabling an earlier connection of the pipeline with the network for storage and/ or processing operations. Another advantage is that the placing of the connecting element is facilitated considerably, since the orientation between the pipeline end and the drilling guide for the wellbore is fixed. Normally this is done by specially manufactured jumpers, the dimension of which has to be measured after the pipeline has been laid. Yet another advantage is that no additional PipeLine End Terminal (PLET) is required when lowering the pipeline, since the base now acts as an end terminal.

It is both possible to connect one or multiple pipelines to a single base, which will for example be dependent on the product(s) flowing through the pipeline(s). In a possible embodiment, the base is lowered first with two or more pipelines connected to it.

In a preferred embodiment, after lowering and positioning a first pre-assembly on the seabed, the base of a second pre-assembly is connected to the pipeline of the first pre-assembly. Possibly, initially a first pipeline is lowered, which can be assembled with a first base forming a first pre-assembly (but can also be connected to a network), and subsequently connect a second base to this launched first pipeline, to which yet another second pipeline is connected. This way it is possible to install a series of bases, interconnected with pipelines, which are also connected to a network for storage and/ or processing operations.

In a preferred embodiment of the method according to the invention, an anchor is lowered and/ or positioned on the seabed prior to the pre-assembly to assist the lowering of the assembly. The weight of the base can be too little to properly and accurately lower the pipeline. Then, an anchor can assist in lowering and accurately positioning the base and the pipeline.

In a preferred embodiment, the base contains a single drilling guide. It is also possible to provide multiple drilling guides in a single base, e.g. to speed up oil recovery.

Preferably, the method for subsea oil or gas recovery according to the invention comprises the step of positioning a christmas tree above the wellbore. After drilling the wellbore, possibly wellhead equipment is placed on top of the wellbore, and possibly well completion is performed e.g. by providing conductor pipe or casing in the wellbore. In a possible embodiment, well completion is performed and wellhead equipment is placed after drilling the wellhole. A connecting element can subsequently be placed between the wellhead equipment and the pipeline. As a connecting element, for example a jumper can be used.

In another preferred embodiment, the wellhead equipment and the connecting element are integrated in a christmas tree. Such a christmas tree comprises a set of valves, spools and fittings and is conventionally connected to the top of a well to direct and control the flow of fluids from the well. Possibly, the christmas tree is placed on the seabed prior to drilling. Analogously, it is possible to place the connecting element on the seabed prior to drilling.

Possibly, on the christmas tree, a blow-out preventer is positioned as is common in subsea oil or gas recovery operations requiring access to the wellbore in a later stage, such as workover operations.

The invention will further be explained with respect to the accompanying drawings, in which:
- Figs. 1a-c: show in perspective part of a vessel suitable for performing the method according to the invention,
- figs. 2a-2c: show in perspective view various steps of a method for subsea oil or gas recovery according to the invention,
- fig. 3: shows in perspective view a blow-out preventer positioned on a pre-assembly according to the invention.

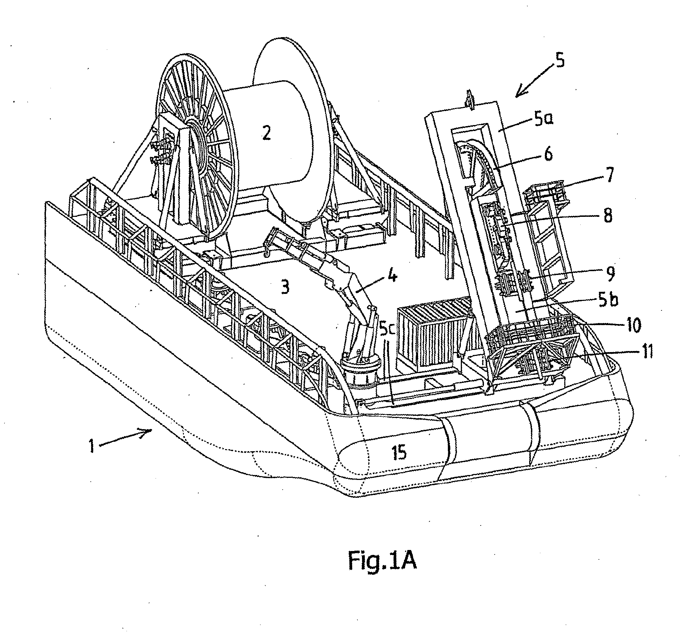

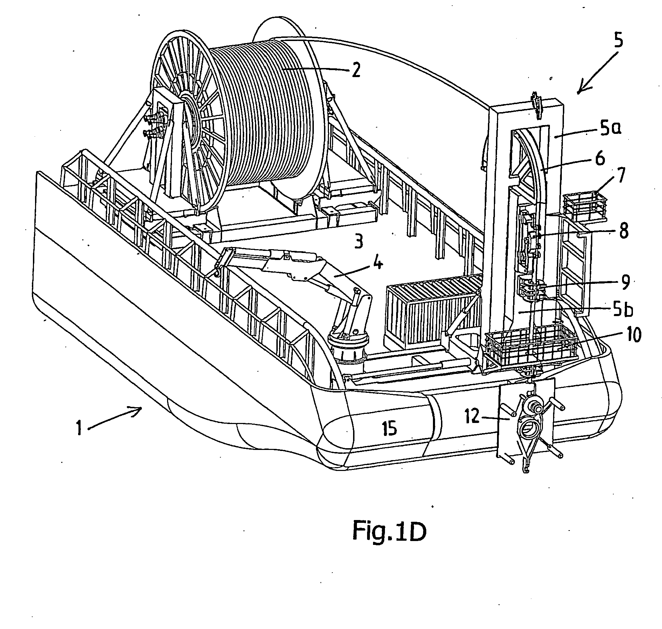

In figs 1a-1c part of a vessel 1 is shown, suitable for performing the method according to the present invention. The vessel 1 comprises on deck 3 a reel 2 for storage of pipeline (not shown). On deck 3 furthermore a crane 4 is arranged, which can be used to lower an anchor (not shown), but can also assist in lowering accessories such as a base, possibly pre-assembled with a pipeline according to the invention.

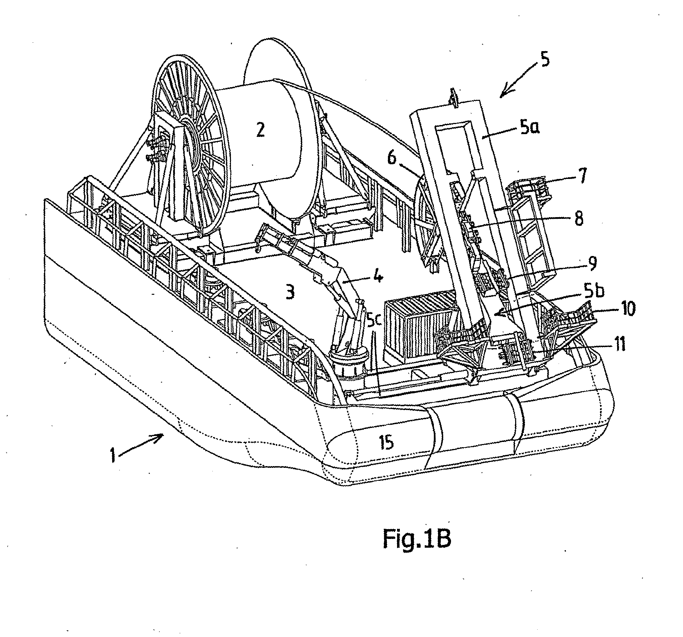

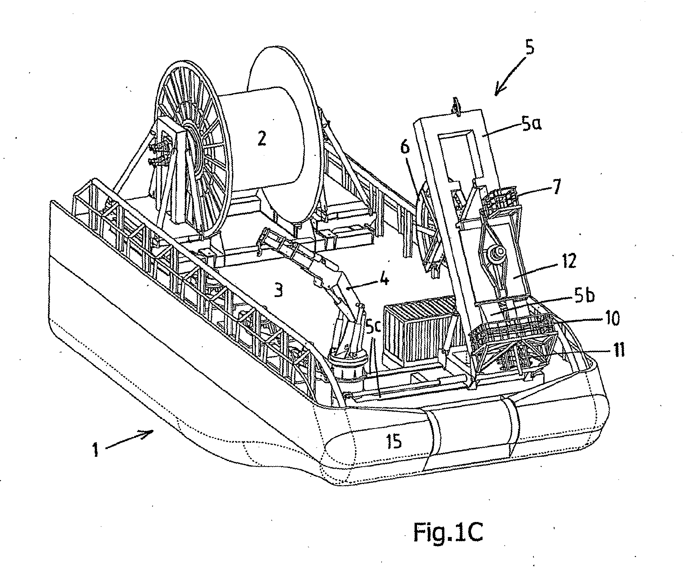

At the stern 15 of the vessel 1 a tower 5 is arranged. Tower 5 is extending upwards from the deck and can be tilted. The tower is moveable across the deck 3 parallel to the stern 15 of the vessel 1 across rails 5c. The tower is moveable for unwinding the pipeline more easily. Tower 5 is composed of an A-frame 5a in which an assembly 5b with a pipeline guide, in the shown embodiment aligner 6 for a pipeline (only shown partially in fig. 1b) is moveably arranged. The arrangement of tower 5 and aligner 6 shown in fig. 1a ensures easy laying of pipeline, tower 5 and aligner 6 acting as a ramp across which the pipeline enters the water. Assembly 5b with aligner 6 can be moved or rotated backwards towards the deck 3 of the vessel as is shown in figs. 1b and 1c. By retracting the assembly 5b with aligner 6, space is created in the tower 5a to introduce an accessory, such as a pre-assembled base and pipeline.

Tower 5 further comprises a working platform 7 which can be entered e.g. by welding engineers to weld a pipeline to a base in order to create a pre-assembled base and pipeline according to the invention. Of course, the working platform 7 can also be used for other operations such as inspection. In the assembly 5b arranged in the A-frame 5a of the tower 5 below the aligner 6 a straightener 8 and a pipe clamp 9 are arranged. In the embodiment shown, a working platform 10 and a pipe clamp 11 are mounted to the A-frame 5a of tower 5. Working platform 10 can be retracted away from.the firing line to enable the passage of accessories such as base 12 shown in fig. 1c by opening as is shown in fig. 1b or alternatively for example by skidding or rotating. Working platform 10 can for example be used to connect an accessory to a launched pipeline, clamped in pipe clamp 11. For reasons of clarity, pipe parts have been shown in pipe clamps 9 and 11, while no other part of the pipeline is shown.

Although it should be understood that tower 5 is appropriate for lowering any accessory, in fig. 1c a base 12 is shown. The shown base 12 is not yet assembled with a pipeline.

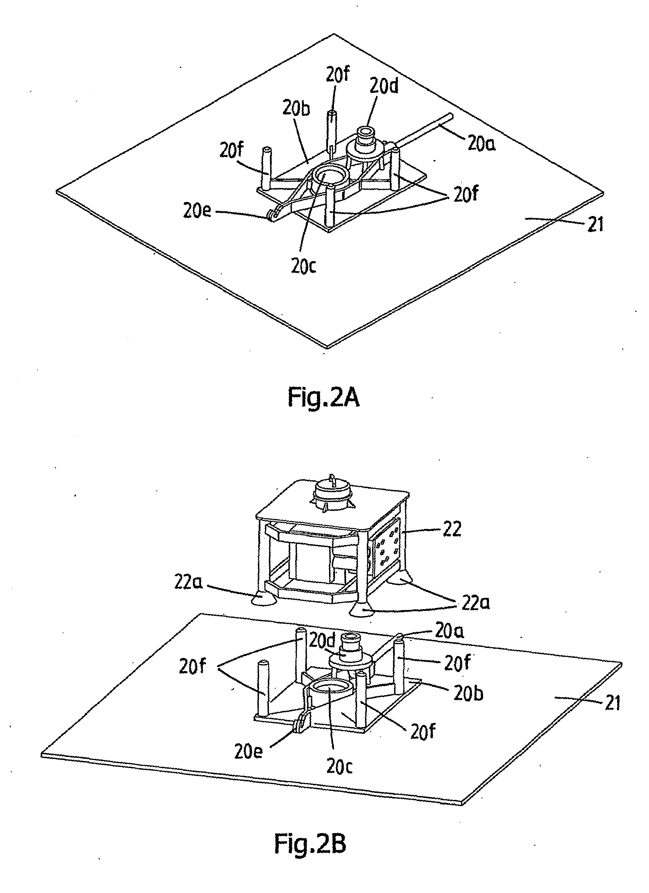

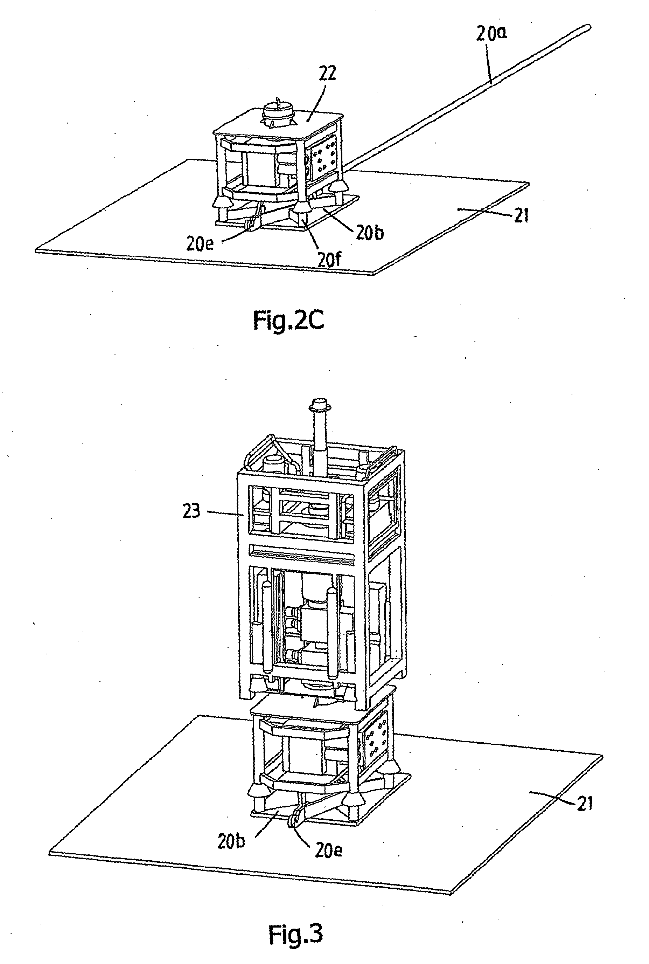

In figs. 2a-2c and 3 various steps of a method for subsea oil or gas recovery according to the invention are illustrated. In fig. 2a an assembly 20 according to the invention is shown launched on the seabed 21. The assembly 20 is pre-assembled from a pipeline 20a and a base 20b. Base 20b comprises a drilling guide 20c to enable drilling of a wellbore and a pipeline end terminal 20d which can be connected to the wellbore via a connecting element. Base 20b further comprises a hook member 20e that can be used to connect base 20b during launch e.g. via a cable to an anchor to assist in lowering and/ positioning the assembly 20.

Positioning elements are arranged on the assembly 20 to enable an easy and precise connection between the assembly 20 and connection element 22. Preferably the connection elements are elements according to the API Standard Guide Post dimensions. In the embodiment shown in fig. 2a, columns 20f extending from base 20b are arranged as positioning elelments to enable an easy and precise connection between the assembly 20 and connection element 22, in this case christmas tree 22 as shown in fig. 2b. Christmas tree 22 comprises recesses 22a complementary to colums 20f on assembly 20 to enable interconnection. Christmas tree 22 further comprises connecting members 22c and 22b to form a interconnection between the wellbore at the seabed surface in drilling guide 20c and the pipeline end terminal 20d.

In fig. 2c the christmas tree 22 is positioned on base and pipeline assembly 20.

Fig. 3 shows a blow-out preventer 23 positioned on pre-assembly 20 on the seabed 21.

## Claims

1. Method for subsea hydrocarbon recovery in which a wellbore is drilled using a base installed on the seabed, said base comprising a drilling guide, in which method at least one pipeline is to be connected to a network for storage and/ or processing operations, **characterize by** the following steps:
- prepaying a pre-assembly 20 of a base (12;20b) and one or more pipelines (20a) on a vessel by welding a pipeline to the base,
- lowering and positioning the pre-assembly on the seabed,
- drilling the wellbore through the drilling guide 20c of the base,
- placing a connecting element 22 between the wellbore and the pipeline.

2. Method according to claim 1, in which an anchor is lowered prior to the pre-assembly to assist the lowering and/ or positioning of the pre-assembly.

3. Method according to claim 1. or 2, in which the base contains a single drilling guide.

4. Method according to any of the previous claims, wherein the connecting elements is placed on the seabed prior to drilling.

5. Method according to any of the previous claims, wherein the connecting element is a Christmas three.

6. Method according to any of the previous claims, in which two or more pipelines connected to a single base are lowered simultaneously from two or more reels.

7. Method according to claim 1, in which after lowering and positioning a first pre-assembly on the seabed, the base of a second pre-assembly is connected to the pipeline of the first pre-assembly.

## Patentansprüche

1. Verfahren für die Unterwasser-Kohlenwasserstoffförderung, wobei mithilfe einer Basis, die auf dem Meeresgrund eingerichtet ist, ein Bohrloch gebohrt wird, wobei die Basis eine Bohrführung umfasst, wobei bei diesem Verfahren zumindest eine Rohrleitung an ein Netz für Lagerungs- und/oder Verarbeitungsvorgänge anzuschließen ist, **gekennzeichnet durch** folgende Schritte:
- Vorbereiten einer Vormontage (20) einer Basis (12; 20b) und einer oder mehrerer Rohrleitungen (20a) auf einem Schiff **durch** Verschweißen einer Rohrleitung mit der Basis,
- Absenken und Anordnen der Vormontage auf dem Meeresgrund,
- Bohren des Bohrlochs **durch** die Bohrführung (20c) der Basis,
- Anbringen eines Verbindungselements (22) zwischen dem Bohrloch und der Rohrleitung.

2. Verfahren nach Anspruch 1, wobei vor dem Absenken der Vormontage ein Anker ausgeworfen wird, um das Absenken und/oder Anordnen der Vormontage zu unterstützen.

3. Verfahren nach Anspruch 1 oder 2, wobei die Basis eine einzelne Bohrführung aufweist.

4. Verfahren nach einem der vorhergehenden Ansprüche, wobei das Verbindungselement vor dem Bohren auf den Meeresgrund gesetzt wird.

5. Verfahren nach einem der vorhergehenden Ansprüche, wobei das Verbindungselement ein Eruptionskreuz ist.

6. Verfahren nach einem der vorhergehenden Ansprüche, wobei zwei oder mehr Rohrleitungen, die mit einer einzelnen Basis verbunden sind, gleichzeitig von zwei oder mehr Trommeln abgesenkt werden.

7. Verfahren nach Anspruch 1, wobei nach dem Absenken und Anordnen einer ersten Vormontage auf dem Meeresgrund die Basis einer zweiten Vormontage mit der Rohrleitung der ersten Vormontage verbunden wird.

## Revendications

1. Procédé pour la récupération d'hydrocarbures sous la mer, dans lequel un forage est foré en utilisant une base installée au fond de la mer, ladite base comprenant un guide de forage, dans lequel procédé, au moins un pipeline doit être raccordé à un réseau pour les opérations de stockage et/ou de traitement, **caractérisé par** les étapes suivantes consistant à :
préparer un pré-assemblage (20) d'une base (12; 20b) et un ou plusieurs pipelines (20a) sur un vaisseau en soudant un pipeline à la base,
abaisser et positionner le pré-assemblage au fond de la mer,
forer le forage par le biais du guide de forage (20c) de la base,
placer un élément de raccordement (22) entre le forage et le pipeline.

2. Procédé selon la revendication 1, dans lequel une ancre est abaissée avant le pré-assemblage pour aider l'abaissement et/ou le positionnement du pré-assemblage.

3. Procédé selon la revendication 1 ou 2, dans lequel la base contient un guide de forage unique.

4. Procédé selon l'une quelconque des revendications précédentes, dans lequel l'élément de raccordement est placé au fond de la mer pour le forage.

5. Procédé selon l'une quelconque des revendications précédentes, dans lequel l'élément de raccordement est un arbre de Noël.

6. Procédé selon l'une quelconque des revendications précédentes, dans lequel deux pipelines ou plus raccordés à une seule base sont abaissés simultanément à partir de deux dévidoirs ou plus.

7. Procédé selon la revendication 1, dans lequel après l'abaissement et le positionnement d'un premier pré-assemblage au fond de la mer, la base d'un deuxième pré-assemblage est raccordée au pipeline du premier pré-assemblage.
